# EUROPÄISCHE PATENTSCHRIFT

(11) **EP 1 404 573 B1**
(45) Veröffentlichungstag und Bekanntmachung des Hinweises auf die Patenterteilung: **03.11.2004**
(21) Anmeldenummer: 02767171.8
(22) Anmeldetag: 04.07.2002
(51) Int. Cl.: B64C 9/16, B64C 9/22

(54) **AUFTRIEBSKLAPPEN-MECHANISMUS**
LIFT-FLAP MECHANISM
MECANISME DE VOLETS DE SUSTENTATION

(30) Priorität: 12.07.2001 DE 10133920
(43) Veröffentlichungstag der Anmeldung: 07.04.2004
(73) Patentinhaber: EADS Deutschland GmbH, 85521 Ottobrunn (DE)
(72) Erfinder: PEREZ-SANCHEZ, Juan, 83620 Feldolling (DE); BECHHEIM, Claudia, 85635 Höhenkirchen (DE); VOGLSINGER, Martin, 85617 Assling (DE)
(86) Internationale Anmeldenummer: PCT/EP2002/007399
(87) Internationale Veröffentlichungsnummer: WO 2003/008266

(56) Entgegenhaltungen:
- EP-A- 0 081 610
- SE-C- 515 029

## Beschreibung

Die Erfindung betrifft eine Auftriebsklappen-Mechanismus zur Verstellung von an einem Tragflügel angeordneten, ein- und ausfahrbaren Auftriebsklappen.

Auftriebsklappen sind in diesem Zusammenhang Klappen an einem bemannten oder unbemannten Flugzeug, die den durch dessen Struktur bewirkten Auftrieb beeinflussen. Derartige Auftriebsklappen können Hochauftriebsklappen wie z.B. die VorderkantenKlappen ("slats") oder Hinterkanten-Klappen ("Flaps") eines Transport- oder Verkehrsflugzeugs, oder auch Trimm-, Brems- oder Steuerflächen jeder Art sein.

Derartige Auftriebsklappen-Mechanismen sind bei dem Flugzeugtyp Airbus A340 und von Patentanmeldung EP-81610 A1 bekannt. Dabei sind am Tragflügel befestigte Klappenträger mit jeweils einer Rollenbahn vorgesehen, die zu einer quasi-linearen Führung der Auftriebsklappe bei deren Verstellung und zur Aufnahme der Klappen-Hauptlast dient. Dazu sind an der Auftriebsklappe Rollenwagen mit Stahlrollen befestigt, von denen jeder jeweils auf einer Rollenbahn mit einem Schienenflansch läuft. Zur Einstellung der Winkellage der Auftriebsklappe in Abhängigkeit der Position des Rollenwagens ist beabstandet vom Rollenwagen ein Hebelgelenk vorgesehen, das beabstandet vom Rollenwagen die Auftriebsklappe mit jeweils einem Träger verbindet. Die Verstellung erfolgt durch einen rotatorischen Stellantrieb, der über Antriebsarme mit der Auftriebsklappe verbunden ist.

Ein Nachteil dieser Auftriebsklappen-Mechanismus ist, daß sehr große Lasten von den Stahlrollen auf die Schienenflansche übertragen werden und diese auf Biegung beanspruchen, so daß grosse Materialdicken erforderlich sind. Diese wirken sich insbesondere bei sehr großen Flügelstrukturen gewichtsmäßig sehr ungünstig aus.

Es ist daher eine Aufgabe der Erfindung, eine Klappen-Mechanismus bei einer quasi-linearen Führung der Auftriebsklappe bereitzustellen, mit der eine Gewichtsreduzierung erzielbar ist.

Diese Aufgabe wird mit den Merkmalen des Patentanspruchs 1 gelöst. Weitere Ausführungsformen sind in den Unteransprüchen angegeben.

Bei dem erfindungsgemässen Auftriebsklappen-Mechanismus ist zur Lastaufnahme und zur kinematischen Führung der Auftriebsklappe eine Hauptanschluß-Mechanik und ein in Strömungsrichtung gesehen beabstandet von diesem angeordnete Nebenanschluß-Mechanik in Form eines gelenkig an der AuftriebsKlappe und dem Klappen-Träger gelagerten Führungshebels vorgesehen, wobei die Hauptanschluß-Mechanik eine Lenkhebel-Anordnung mit zumindest einem Lenkhebel aufweist, der ein erstes Lenkhebel-Gelenk und ein zweites Lenkhebel-Gelenk aufweist, wobei der zumindest eine Lenkhebel über ein am ersten Lenkhebel-Gelenk angekoppeltes Pendel mit dem Klappen-Träger in Verbindung steht und das zweite Lenkhebel-Gelenk derart geführt wird, daß mit einer bestimmten Winkellage des zumindest einen Lenkhebels die Positionen des Hauptanschluß-Gelenks und des Nebenanschluß-Gelenks eindeutig bestimmt sind. Die Führung des zweiten Lenkhebel-Gelenks kann nach verschiedenen erfindungsgemässen Ausführungsformen gestaltet sein.

Ein Vorteil des erfindungsgemäßen Auftriebsklappen-Mechanismus ist, daß ööweitgehend auf die Übertragung von Hauptlasten mittels Rollen verzichtet werden kann, so daß dieser gegenüber Mechanismen aus dem Stand der Technik zu einer Gewichtseinsparung führt.

Ein weiterer Vorteil der Erfindung ist, daß mit wenigen Änderungen des Mechanismus eine Vielzahl Ausfahrkurven der Auftriebsklappe geschaffen werden kann.

Im folgenden wird die Erfindung anhand der beiliegenden Figur beschrieben, die zeigen:
- Figur 1 einen Längsschnitt durch den in Strömungsrichtung gesehen hinteren Bereich eines Tragflügels mit einer Auftriebsklappe und einer Ausführungsform des erfindungsgemäßen Auftriebsklappen-Mechanismus mit einer ersten Ausführungsform einer Lenkhebel-Anordnung, wobei sich die Auftriebsklappe in einer eingefahrenen Stellung befindet,
- Figur 2 einen Längsschnitt durch den hinteren Bereich des Tragflügels gemäß Figur 1, wobei sich die Auftriebsklappe in einer mittleren oder teilweise ausgefahrenen Stellung befindet,
- Figur 3 einen Längsschnitt durch den hinteren Bereich des Tragflügels gemäß Figur 1, wobei sich die Auftriebsklappe in einer ganz ausgefahrenen Stellung befindet,
- Figur 4 einen Querschnitt entlang der Linie 4-4 der Figur 1,
- Figur 5a eine perspektivische Darstellung des erfindungsgemäßen Klappen-Mechanismus nach der Figur 3,
- Figur 5b eine perspektivische Darstellung der Ausführungsform des erfindungsgemäßen Klappen-Mechanismus nach der Figur 1 mit einer zweiten Ausführungsform der Lenkhebel-Anordnung, wobei sich die Auftriebsklappe in einer eingefahrenen Stellung befindet,
- Figur 6 einen Längsschnitt durch den in Strömungsrichtung gesehen hinteren Bereich eines Tragflügels mit einer Auftriebsklappe und einer weiteren Ausführungsform des erfindungsgemäßen Auftriebsklappen-Mechanismus mit der ersten Ausführungsform einer Lenkhebel-Anordnung, wobei sich die Auftriebsklappe in einer eingefahrenen Stellung befindet,
- Figur 7 einen Längsschnitt durch den hinteren Bereich des Tragflügels nach der Figur 6 bei einer mittleren oder teilweise ausgefahrenen Stellung der Auftriebsklappe,
- Figur 8 einen Längsschnitt durch den hinteren Bereich des Tragflügels nach der Figur 6 bei einer ganz ausgefahrenen Stellung der Auftriebsklappe,
- Figur 9 einen Querschnitt entlang der Linie 9-9 der Figur 7,
- Figur 10 eine perspektivische Darstellung des erfindungsgemäßen Klappen-Mechanismus nach der Figur 6
- Figur 11 einen Längsschnitt durch den in Strömungsrichtung gesehen hinteren Bereich eines Tragflügels mit einer Auftriebsklappe und einer dritten Ausführungsform des erfindungsgemäßen Auftriebsklappen-Mechanismus bei einer eingefahrenen Stellung der Auftriebsklappe,
- Figur 12 einen Längsschnitt durch den hinteren Bereich des Tragflügels nach der Figur 11 bei einer mittleren oder teilweise ausgefahrenen Stellung der Auftriebsklappe,
- Figur 13 einen Längsschnitt durch den hinteren Bereich des Tragflügels nach der Figur 11 bei einer ganz ausgefahrenen Stellung der Auftriebsklappe,
- Figur 14 eine perspektivische Darstellung des erfindungsgemäßen Klappen-Mechanismus nach der Figur 11.

Bei der Figurenbeschreibung sind Merkmale mit gleicher Funktion in den verschiedenen Figuren mit denselben Begriffen benannt und denselben Bezugszeichen versehen worden.

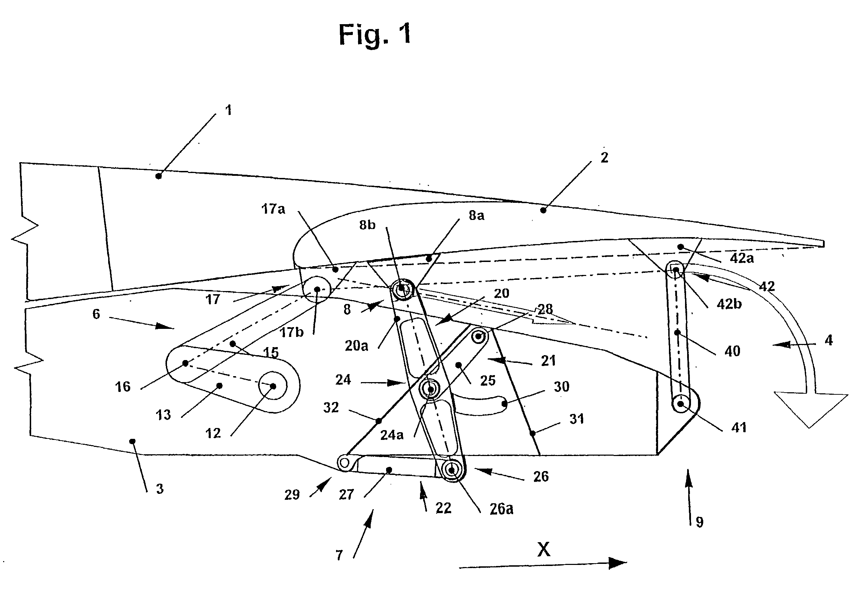

Die Figuren zeigen einen in Strömungsrichtung X (Fig. 1) gesehen hinteren Teil eines Tragflügels oder Flügelkastens 1 eines Flugzeugs mit einer Hinterkanten-Klappe 2 als Beispiel einer Auftriebsklappe, die mittels zumindest eines an einem Klappenträger ("flap track") 3 gelagerten Klappen-Mechanismus 4 verstellbar ist. Dazu ist an dem Klappenträger 3 weiterhin ein Antriebssystem 6 zur Aufbringung von Verstellkräften auf die Auftriebsklappe 2 gelagert. Der erfindungsgemäße Klappen-Mechanismus 4 umfaßt weiterhin eine Hauptanschluß-Mechanik 7 und eine Nebenanschluß-Mechanik 9, wobei die Hauptanschluß-Mechanik 7 zur Aufnahme der wesentlichen Gewichtslasten und der auf die Hinterkanten-Klappe 2 wirkenden Luftlasten und die Nebenanschluß-Mechanismus 9 zusammen mit der HauptanschlußMechanik 7 zur kinematischen Führung der Hinterkanten-Klappe 2 dient.

An dem Tragflügel, für den die Erfindung vorgesehen ist, sind üblicherweise mehrere, in Spannweiten-Richtung Y gesehen nebeneinander angeordnete Klappen-Träger 3 vorgesehen, die vorzugsweise jeweils einen erfindungsgemäßen Klappen-Mechanismus 4 aufweisen. Es ist jedoch an einem Tragflügel zumindest ein Klappen-Träger 3 mit dem erfindungsgemäßen Klappen-Mechanismus 4 angeordnet. Der Klappen-Mechanismus 4 kann auch mit anderen aus dem Stand der Technik bekannten Klappen- Mechanismen kombiniert sein. In einer bevorzugten Anwendung der Erfindung sind zumindest zwei Klappen-Träger 3 mit jeweils einem erfindungsgemäßen Klappen-Mechanismus 4 an einem Tragflügel angeordnet. In einer weiteren bevorzugten Anwendung der Erfindung kann die Lagerung und Verstellung der Auftriebsklappe auch mit nur einem an einem Klappenträger angeordneten erfindungsgemäßen Klappen-Mechanismus erfolgen, wobei eine weitere Lagerung der Auftriebsklappe mit einem anderen Klappen-Mechanismus nach dem Stand der Technik oder auch mittels einer sphärischen SchwenkLagerung erfolgen kann.

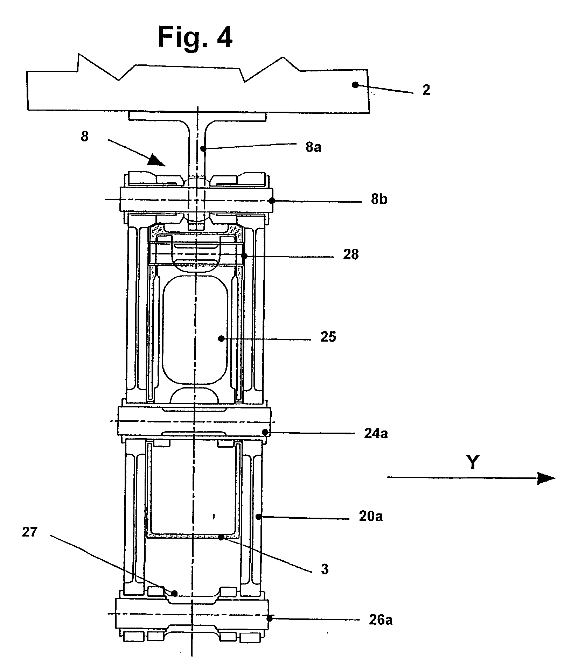

Die Erfindung wird nachfolgend an einem von vorzugsweise mehreren Klappen-Trägern 3 beschrieben. Zunächst wird eine erste in den Figuren 1 bis 5 dargestellte Ausführungsform der Erfindung beschrieben:

Das Antriebssystem 6, das vorzugsweise am in Strömungsrichtung oder Flügel-Längsrichtung X gesehen vorderen Bereich der Auftriebs-Klappe 2 angeordnet ist, ist nach dem Stand der Technik gebildet und kann in verschiedener Weise ausgeführt sein. In einer bevorzugten Ausführungsform wird dieses aus einem rotatorischen Stellantrieb 11 mit einer Antriebsachse 12, einer von dieser bewegten Kombination aus einem Antriebsarm 13 und einem Antriebslenker 15 gebildet, die über ein Drehgelenk 16 miteinander verbunden sind. Der Antriebslenker 15 wirkt über ein Antriebsgelenk 17 und einer diesem zugehörigen Antriebs-Achse 17a auf einen an der Hinterkanten-Klappe 2 vorgesehenen Antriebsbeschlag 17a, der vorzugsweise am vorderen Bereich der Auftriebs-Klappe 2 angeordnet ist. Bei einer Betätigung des Stellantriebs 16 wirken über die Antriebsachse 12 der Antriebsarm 13 und der Antriebslenker 15 auf den Antriebsbeschlag 17a, um die Hinterkanten-Klappe 2 zu bewegen oder zu verstellen.

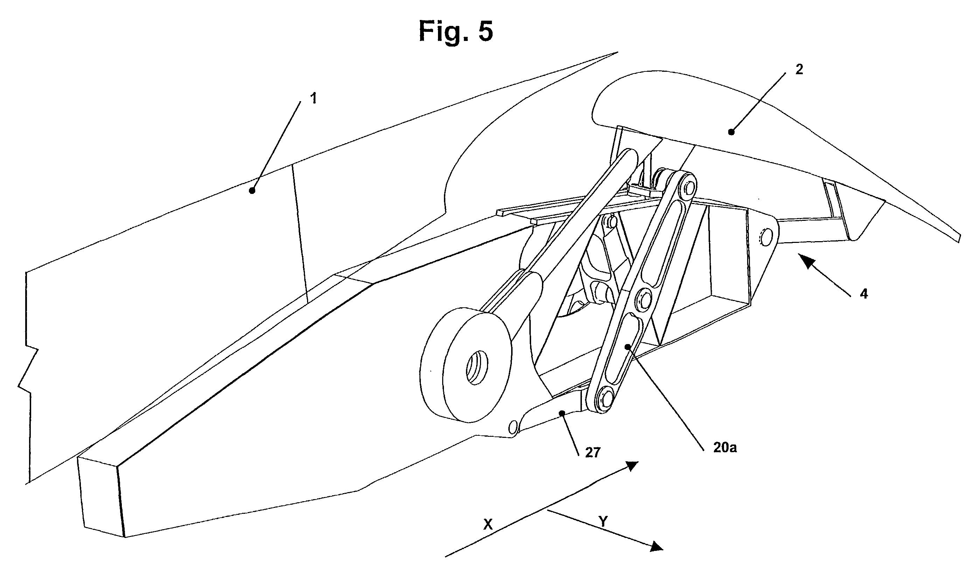

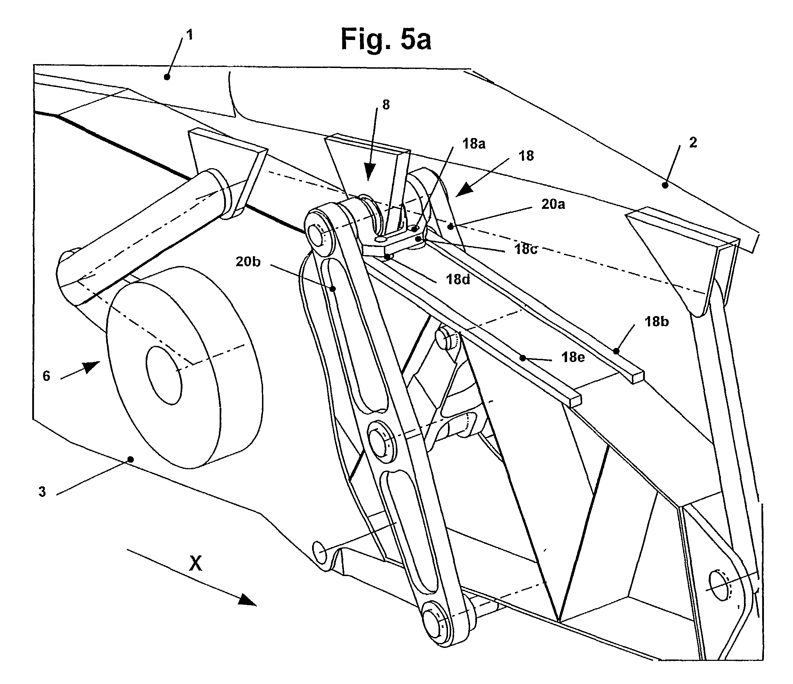

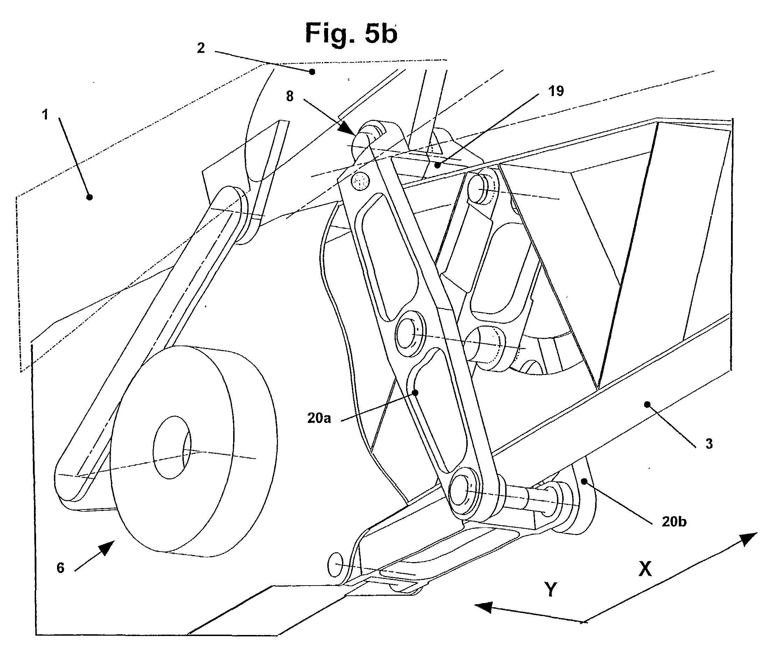

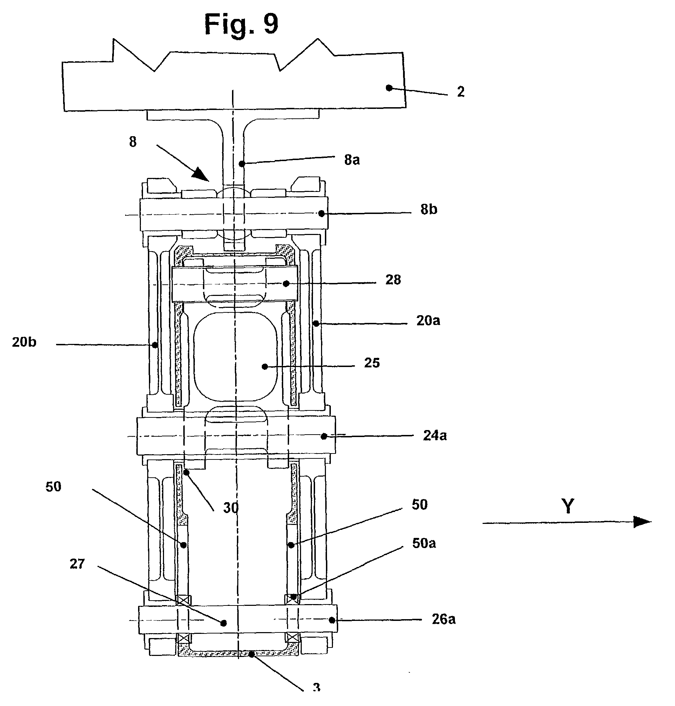

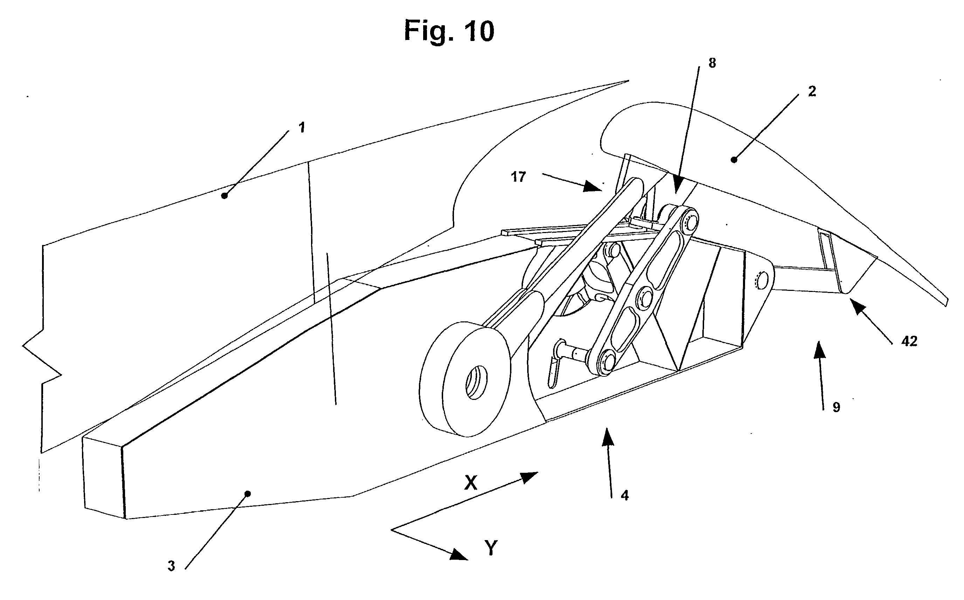

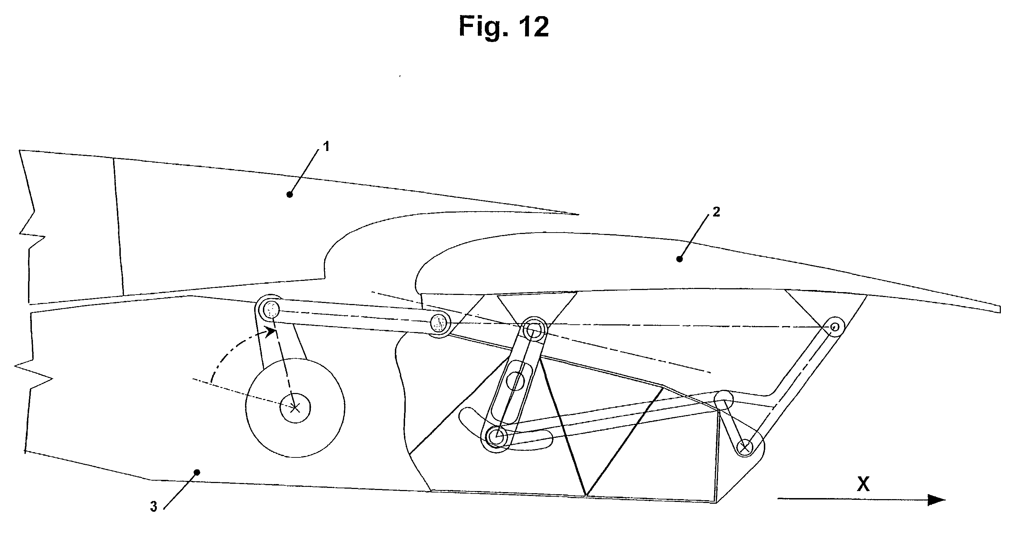

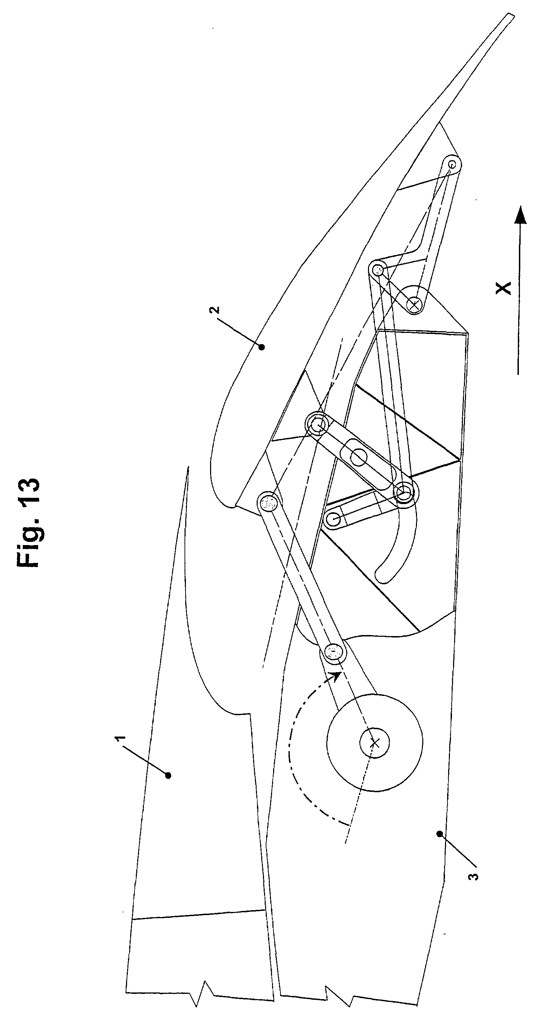

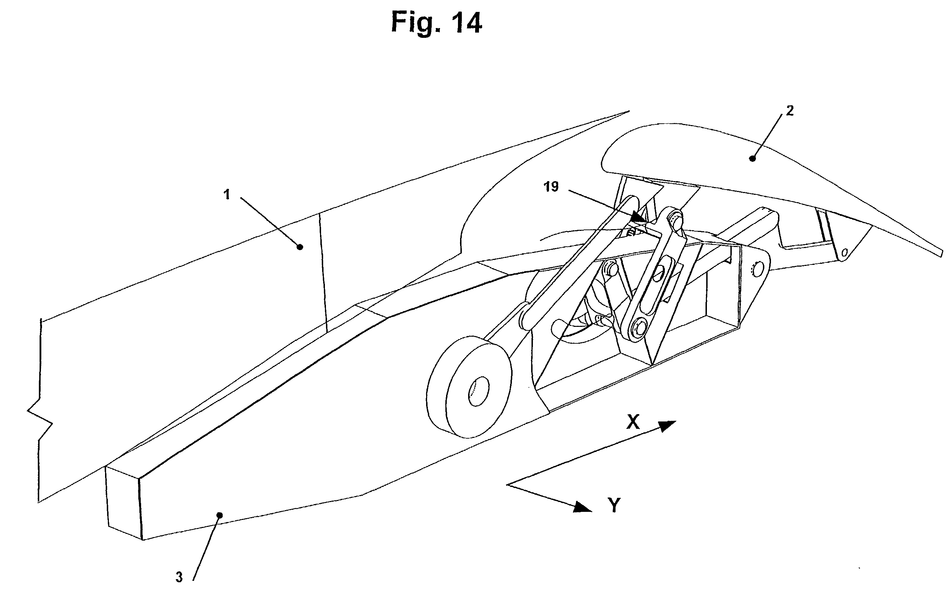

In der Darstellung der Figuren 1 bis 14 ist die Hauptanschluß-Mechanik 7 in Strömungsrichtung X gesehen vor der Nebenanschluß -Mechanik 9 angeordnet. Grundsätzlich kann die Hauptanschluß-Mechanik 7 auch hinter der Nebenanschluß -Mechanik 9 angeordnet sein. Die Hauptanschluß-Mechanik 7 wirkt über eine Lenkhebel-Anordnung 20 auf ein Hauptanschluß-Gelenk 8 mit einem Hauptanschluß-Beschlag 8a an der Auftriebs-Klappe 2, der mit einer Haupt-Achse 8b zusammenwirkt. In der in den Figuren 1 bis 5 sowie den Figuren 6 bis 10 dargestellten ersten Ausführungsform ist die Lenkhebel-Anordnung aus zwei Schwing-Lenkern oder Lenkhebeln 20a, 20b (Fig. 5) gebildet. Die Lenkhebel 20a, 20b befinden sich bei der ersten Ausführungsform der Lenkhebel-Anodnung 20 seitlich des Klappen-Trägers 3, so daß der Klappen-Träger 3 zwischen den Lenkhebeln 20a, 20b angeordnet ist. Hierzu ist jedes Paar von Lenkhebeln 20a, 20b über die zwischen diesen verlaufende Hauptachse 8b miteinander verbunden, die in dem Hauptanschluß-Beschlag 8a des Hauptanschluß-Gelenks 8 vorzugsweise sphärisch gelagert ist. Die Lagerung kann auch axial vorgesehen sein. Es können auch mehr als zwei Lenkhebel in einer Lenkhebel-Anordnung 20 vorgesehen sein.

Alternativ kann die Lenkhebel-Anordnung 20 in einer zweiten Ausführungsform auch aus einem Lenkhebel gebildet sein, der zwischen dem Klappen-Träger 3 oder seitlich desselben angeordnet sein kann. Allgemein ist zumindest ein Lenkhebel in einer Lenkhebel-Anordnung 20 vorgesehen.

Die Lenkhebel-Anordnung 20 kann in der Gestaltung sowohl mit einem als auch mit mehreren Lenkhebeln auf dem Klappen-Träger 20 mittels einer Führungs-Anordnung 18, die im Bereich des Haußtanschluß-Gelenks angeordnet ist, geführt sein (Fig. 1 bis 10) oder ohne Führung am Klappen-Träger 3 (Fig. 15, 16) ausgeführt sein. Bei letzterer Ausführung sind bei der Verwendung von zwei oder mehr Lenkhebeln 20a, 20b diesselben über einen vom Klappen-Träger 3 beabstandeten Bügel 19 im Bereich des Hauptanschluß-Gelenks 8 miteinander verbunden (Fig. 5b; Fig. 11 bis 14). Die Lenkhebel können einteilig oder über eine Verbindungsstelle mit dem Bügel 19 verbunden sein.

Die Führungs-Anordnung 18 weist eine lenkerseitige Führung 18a und eine trägerseitige Führung 18b auf und kann zur Abstützung der Lenkhebel-Anordnung 20 in X- oder auch in Y-Richtung dienen. Die konkrete Gestaltung der Führungs-Anordnung 18 ist nach dem Stand der Technik vorgesehen, wobei die lenkerseitige Führungseinrichtung 18a vorzugsweise als Wagen 18c mit einer Rolle oder mehreren Rollen 18d ausgebildet ist, die mit einer Schiene 18e der trägerseitigen Führung 18b zusammenwirkt bzw. zusammenwirken.

Der zumindest eine Lenkhebel der Lenkhebel-Anordnung 20 wird auf seiten des Klappen-Trägers 3 durch eine erste 21 und eine zweite 22 Lenkhebel-Führung geführt. Durch das Zusammenwirken der ersten 21 und der zweiten 22 Lenkhebel-Führung wird bewirkt, daß mit einer bestimmten Winkelneigung des zumindest einen Lenkhebels eine bestimmte Position des Hauptanschluß-Gelenks 7 verbunden ist.

Die erste Lenkhebel-Führung 21 weist ein erstes Lenkhebel-Gelenk 24 auf, an dem ein mit dem Klappen-Träger 3 verbundenes Pendel 25 angeschlossen ist. Die zweite Lenkhebel-Führung 22 weist ein zweites in dem zumindest einen Lenkhebel angeordnetes Lenkhebel-Gelenk 26 auf. Die Gelenke 24, 26 sind in jedem vorgesehenen, d.h. in jedem zumindest einen Lenkhebel 20a, 20b angeordnet. Das erste Lenkhebel-Gelenk 24 weist eine Achse oder Schwing-Achse 24a auf, die bei der Verwendung von zwei oder mehr Lenkhebeln je Lenkhebel-Anordnung 20 deren Lenkhebel miteinander verbindet. Das Pendel 25 ist im Klappen-Träger 3 mittels eines Pendel-Gelenks 28 gelagert. Auf diese Weise verbindet das Pendel 25 den Klappen-Träger 3 mit dem zu der Lenkhebel-Anordnung 20 gehörenden zumindest einen Lenkhebel, wodurch sich das erste Lenkhebel-Gelenk 24 bzw. die Achse 24a auf einer Kreisbahn bewegt.

Die zweite Lenkhebel-Führung 22 mit dem zweite Lenkhebel-Gelenk 26 kann auf verschiedene Weise realisiert sein. In einer ersten, in den Figuren 1 bis 5 dargestellten Ausführungsform derselben ist das zweite Lenkhebel-Gelenk 26 in der Längsrichtung des zumindest einen Lenkhebels gesehen beabstandet von dem ersten Lenkhebel-Gelenk 24 an dem zumindest einen Lenkhebel 20a, 20b angeordnet. In dieser Ausführungsform wird das zweite Lenkhebel-Gelenk 26 mittels einer Strebe 27, die über eine Achse 26a in dem zweiten Lenkhebel-Gelenk 26 gelagert ist, mit einem am Klappen-Träger 3 angeordneten Streben-Gelenk 29 gekoppelt. Das zweite Lenkhebel-Gelenk 26 ist in der Darstellung der Figuren 1 bis 5 an dem dem Hauptanschluß-Gelenk (8) gegenüberliegenden Ende der Lenkhebel-Anordnung angeordnet. Die Strebe 27 kann je nach der zu erzielenden Ausfahrkurve auch an einer anderen Stelle der Lenkhebel-Anordnung und insbesondere im ersten Lenkhebel-Gelenk 24 angelenkt sein.

Da die Achse 24a des ersten Lenkhebel-Gelenks 24, sofern zwei oder mehr Lenkhebei je Lenkhebel-Anordnung vorgesehen sind, mehrere Lenkhebel miteinander verbindet und zwischen diesen verläuft, ist gegebenenfalls in dem Klappen-Träger 3 eine Öffnung oder ein Schlitz 30 vorgesehen, durch die bzw. durch den sich die Schwing-Achse 24a hindurch erstreckt. Die Öffnung ist nicht erforderlich, wenn die Achse 24a seitlich des zugehörigen Klappen-Trägers 3 gelegen ist. Am Klappen-Träger 3 können weiterhin eine oder mehrere Verstärkungsrippen 31, 32 angeordnet sein, um eine gewichts- bzw. kraftflußmäßig günstige Gestalt des Klappen-Trägers 3 zu erreichen.

In einem Bereich an der der Auftriebs-Klappe 2, der in Strömungsrichtung X gesehen von dem Hauptanschluß-Gelenk 8 beabstandet ist, ist die Nebenanschluß-Mechanik 9 mit einem Nebenanschluß-Gelenk 42 angeordnet. Das Hauptanschluß-Gelenk 8 kann in Strömungsrichtung X gesehen vor oder hinter dem Nebenanschluß-Gelenk 42 angeordnet sein. Durch das Zusammenspiel der Hauptanschluß-Mechanik 7 mit der Nebenanschluß-Mechanik 9 ist mit einer bestimmten Position des Antriebs-Gelenks 17 eine bestimmte Position des Nebenanschluß-Gelenks 42 eindeutig bestimmt.

Die Nebenanschluß-Mechanik 9 umfaßt einen Führungshebel 40, der seinerseits in einem trägerseitigen Führungsgelenk oder Festpunkt-Gelenk 41 am Klappen-Träger 3 und andererseits in dem klappenseitigen Nebenanschluß-Gelenk 42 gelagert ist. Das Nebenanschluß-Gelenk 42 weist vorzugsweise eine Achse 42b auf, die mit einem an der Auftriebs-Klappe 3 angeordneten Nebenanschluß-Beschlag 43a zusammenwirkt. Das Nebenanschluß-Gelenk 42 kann je nach Ausführungsform des Klappen-Mechanismus bzw. der zu erzielenden Beweglichkeit der Auftriebs-Klappe 3 ein sphärisches oder ein nur axial bewegliches Gelenk sein.

In den Figuren ist die Nebenanschluß-Mechanik 9 in Strömungsrichtung X gesehen hinter der Hauptanschluß-Mechanik 7 angeordnet. Erfindungsgemäß können diese mechanischen Vorrichtungen 7, 9 auch in umgekehrter Reihenfolge zueinander angeordnet sein.

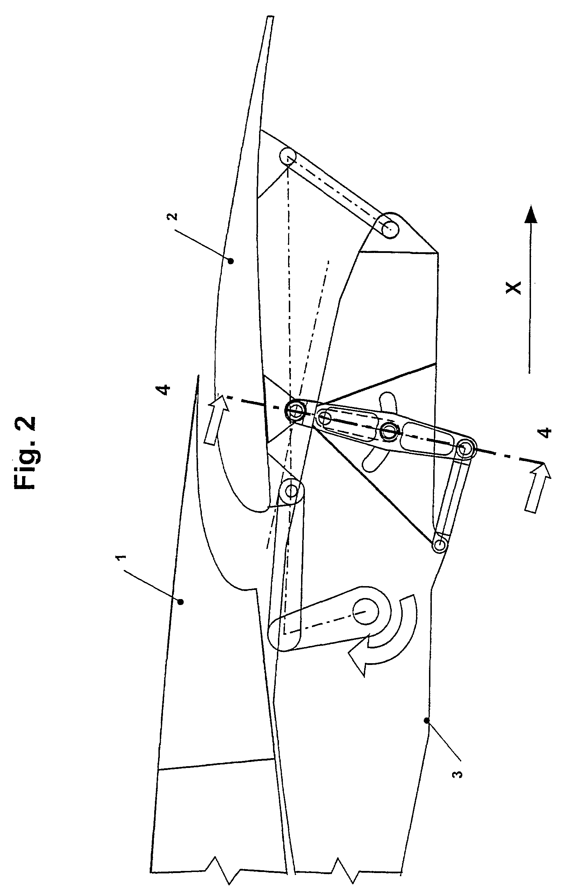

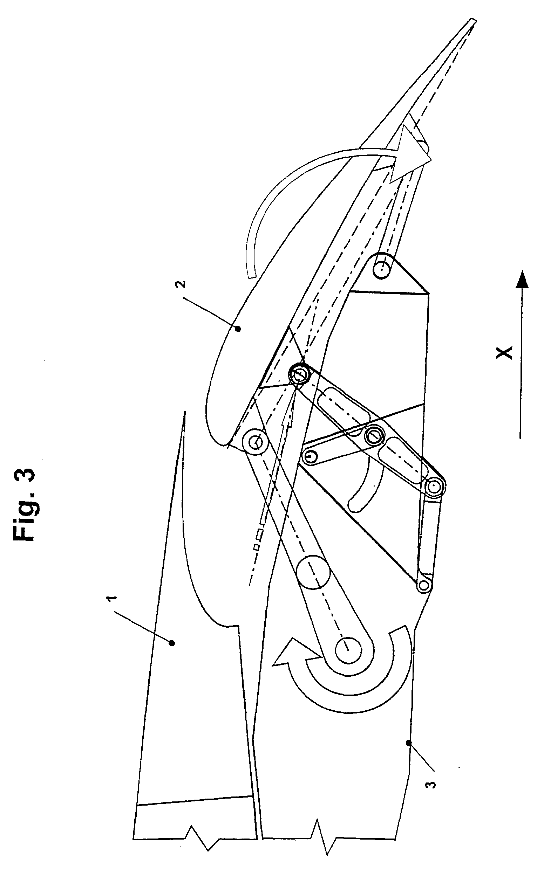

Die Funktionsweise der erfindungsgemäßen Klappen-Mechanismus 4 wird für das in den Figuren 1 bis 5 dargestellten Ausführungsbeispiel im folgenden anhand der Figuren 1 bis 3 beschrieben. Die Figur 1 zeigt die von der Klappen-Mechanismus 4 betätigte Auftriebs-Klappe 2 in ihrer eingefahrenen Stellung. Um die Auftrieb-Klappe 2 in eine ausgefahrene Stellung zu bewegen, wird das Antriebs-System 6 aktiviert, das die Energie zu Bewegung der Auftriebs-Klappe in eine andere Stellung aufbringt. Die räumliche Orientierung der Auftriebs-Klappe in seiner jeweiligen Stellung, wird durch die Hauptanschluß-Mechanik 7 und die Nebenanschluß-Mechanik 9 festgelegt, die durch ihre erfindungsgemäße Gestaltung vorteilhafterweise so angepaßt werden kann, daß sich eine quasi-lineare Bewegung der Auftriebs-Klappe 2 ergibt. Jedoch sind mit dem erfindungsgemäßen Klappen-Mechanismus 4 auch andere Bewegungsformen erzielbar. Mit der Nebenanschluß-Mechanik 9 wird das Nickmoment der Auftriebs-Klappe 2 kompensiert, das sich aufgrund der Gewichtskraft der Auftriebs-Klappe sowie aus den auf diese wirkenden äußeren Kräften ergibt. Eine mittlere Ausfahr-Stellung der Auftriebs-Klappe 2 ist in der Figur 2 und die ausgefahrene Stellung in der Figur 3 dargestellt.

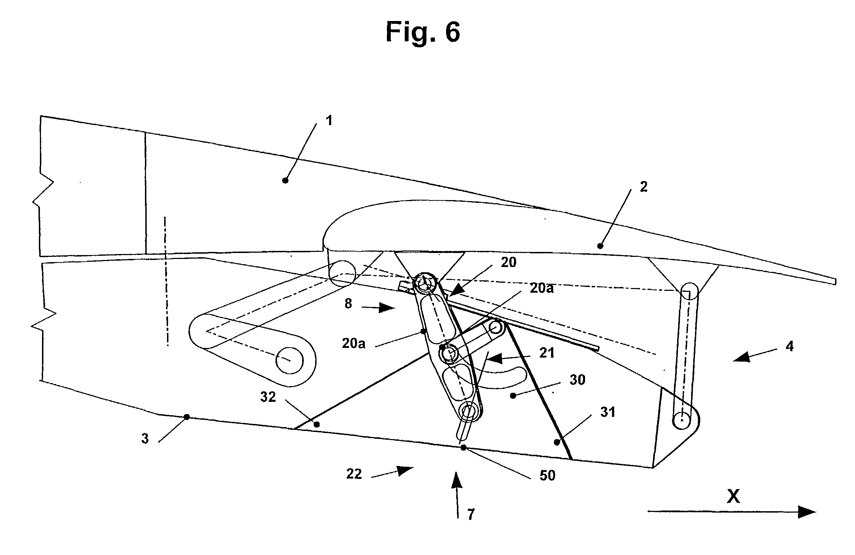

Es wird im folgenden anhand der Figuren 6 bis 10 eine weitere oder zweite Ausführungsform der Hauptanschluß-Mechanik 7, wobei die Nebenanschluß-Mechanik 9 wie in der Darstellung der Figuren 1 bis 5 ist. Die zweite Ausführungsform der Hauptanschluß-Mechanik 7 weist eine Lenkhebel-Anordnung 20 mit zumindest einem Lenkhebel auf. In den Figuren 6 bis 10 ist eine Ausführungsform der Lenkhebel-Anordnung 20 mit zwei Lenkhebeln 20a, 20b, wobei die Lenkhebel 20a, 20b auf jeweils gegenüberliegenden Seiten des Klappen-Trägers 3 gelegen sind. Die Lenkhebel-Achse 24a, an der das Pendel 25 angelenkt ist, erstreckt sich daher durch eine entsprechend im Klappen-Träger 3 vorgesehene Öffnung 30. Im Gegensatz zur ersten Ausführungsform der Hauptanschluß-Mechanik 7 ist bei der zweiten Ausführungsform die zweite Lenkhebel-Führung 22 derart ausgebildet, daß die im zweiten Lenkhebel-Gelenk 26 gelagerte Achse 26a in einem Führungsschlitz 50 vorzugsweise mittels Rollen 50 geführt wird, der im Klappenträger 3 angeordnet ist. Dieser legt die kinematische Beweglichkeit des dem Hauptanschluß-Gelenk 8 gegenüberliegenden Endes der Lenkhebel-Anordnung 20 bzw. des zumindest einen Lenkhebels bzw. 20a, 20b fest. Auf diese Weise wird durch das Zusammenwirken der ersten 21 mit der zweiten 22 Lenkhebel-Führung mit der Neigung oder Winkellage der Lenkhebel-Anordnung 20 eine bestimmte und eindeutige Position des Hauptanschluß-Gelenks 8 festgelegt.

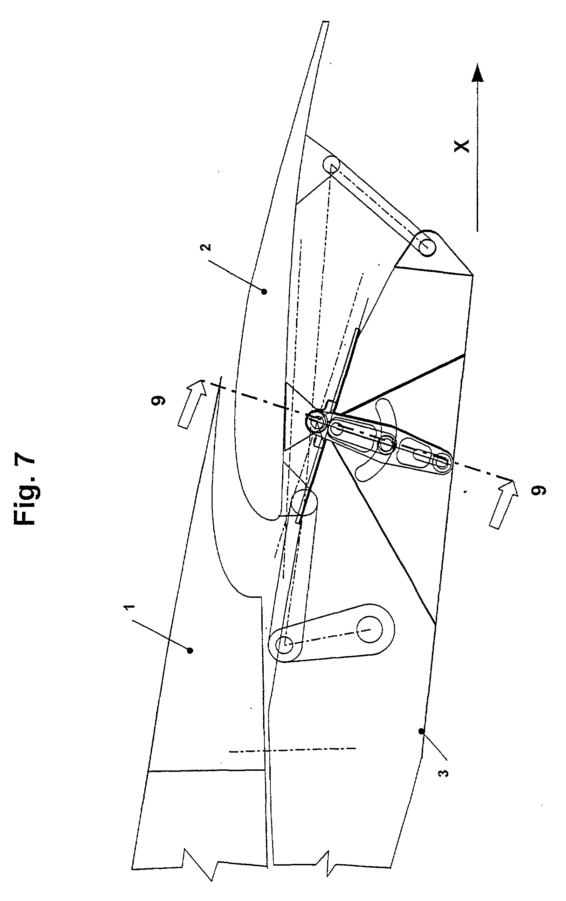

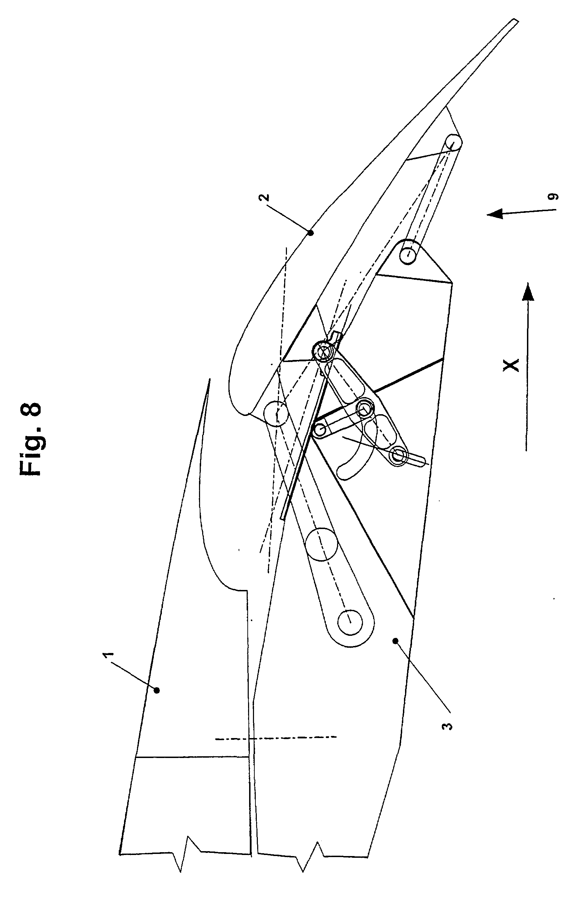

Die Funktionsweise des erfindungsgemäßen Klappen-Mechanismus 4 mit der der zweiten Ausführungsform der Hauptanschluß-Mechanik 7 ist analog zur Funktionsweise der ersten Ausführungsform vorgesehen und ergibt sich anhand der Figuren 6 bis 8, in denen die Auftriebs-Klappe 2 in drei verschiedenen Verstellpositionen dargestellt ist. In der Figur 6 zeigt die Klappen-Mechanismus 4 in einem Zustand, bei der die Auftriebs-Klappe 2 in einer eingefahrenen Stellung befindet. Die Figur 7 zeigt den Klappen-Mechanismus 4 bzw. die Auftriebsklappe 2 in einer mittleren Ausfahr-Stellung, während die Figur 8 diese in einer vollständig ausgefahrenen Stellung zeigt.

Das Antriebssystem 6 legt erfindungsgemäß die Position des Antriebs-Gelenks 17 fest, nicht jedoch die räumliche Orienierung der Auftriebs-Klappe 2 in Abhängigkeit seiner Ausfahrstellung. Alternativ zu der in den Ausführungsformen der Figuren 1 bis 10 dargestellten Anordnung des Antriebssystem 6 kann dieses jedoch beispielsweise auch direkt auf einen oder mehrere Schwing-Lenker 20, bzw. 20a, 20b wirken, so daß dann der Antriebsarm 13 und der Antriebs-Lenker 15 in anderer Gestalt vorgesehen sind oder mit Bestandteilen der Hauptanschluß- oder Nebenanschluß-Mechanik zusammenwirken.

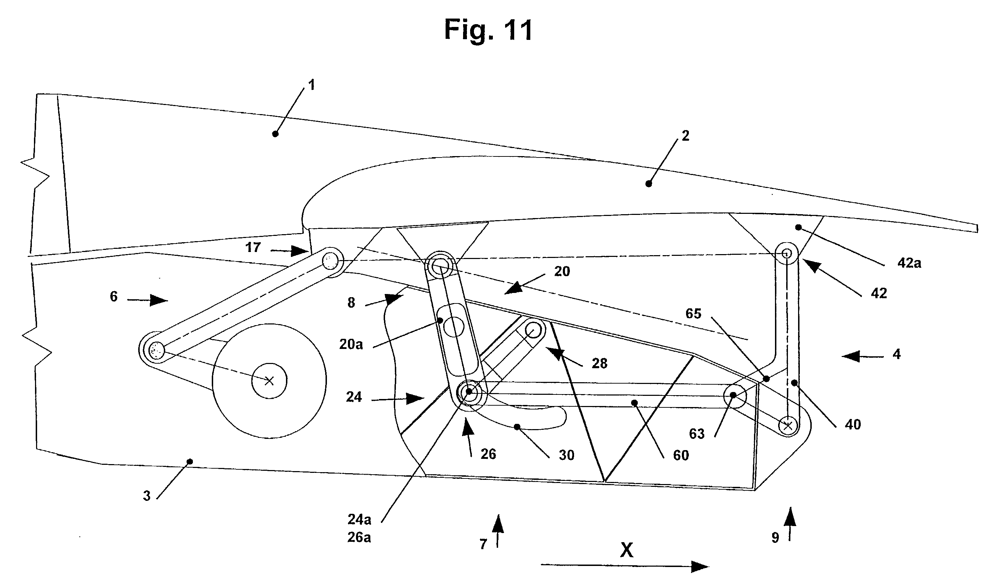

In einer weiteren Ausführungsform der Erfindung, die in den Figuren 11 bis 14 dargestellt ist, sind die Hauptanschluß-Mechanik 7 und die Nebenanschluß-Mechanik 9 mechanisch miteinander gekoppelt, um auf diese Weise bei einer bestimmten Winkellage oder Orientierung der Lenkhebel-Anordnung 20 eine eindeutige Position des Hauptanschluß-Gelenks 8 und des Nebenanschluß-Gelenks 42 zu bewirken.

Bei dieser Ausführungsform ist an dem zweiten Lenkhebel-Gelenk 26 eine Verbindungsstrebe 60 angekoppelt, die die Lenkhebel-Anordnung 20 bzw. den zumindest einen Lenkhebel 20a, 20b mit dem Führungshebel 40 mechanisch koppelt. Zu diesem Zweck ist an dem Führungshebel 40 ein Verbindungsgelenk 63 zur Lagerung des Lenkhebel-Gelenks 20 am Führungshebel 40 angeordnet. Die Verbindungsstrebe 60 kann auch an einer anderen Stelle an dem zumindest einen Lenkhebel oder an einer Verlängerung desselben oder auch an dem Pendel 25 gelagert sein. Der Ort der Lagerstelle bestimmt die Ausfahrkurve der Auftriebs-Klappe, so daß sich durch die Wahl der Lagerstelle sowie der Größenverhältnisse der Auftriebsklappen-Mechanik eine Vielzahl von möglichen Ausfahrkurven ergibt.

Die Lage des Verbindungs-Gelenks 63 am Führungshebel 40 sowie die Lage des zweiten Lenkhebel-Gelenks 26 an dem zumindest einen Lenkhebel 20a, 20b hängt von den wirksamen Längen der Hauptanschluß- 7 und Nebenanschluß-Mechanik 9 sowie der zu erreichenden Verstellkurve der Auftriebs-Klappe 2. Dabei kann auch eine Auskragung oder eine Abstandshalterung 65 am Führungshebel 40 (siehe Figur 11 bis 14) vorgesehen sein, um eine angestrebte Hebelwirkung in Abhängigkeit der Winkellage des Führungshebels 40 zu erreichen. Ein solche Abstandshalterung kann zu diesem Zweck auch an dem zumindest einen Lenkhebel 20a, 20b vorgesehen sein.

Das zweite Lenkhebel-Gelenk 26 ist auch bei der Ausführungsform der Hauptanschluß- und Nebenanschluß-Mechanik nach den Figuren 11 bis 14 im im besonderen an derselben Position wie das erste Lenkhebel-Gelenk 24 angeordnet. Dies kann dadurch realisiert sein, daß die Achse 24a des ersten Lenkhebel-Gelenks 24 identisch ist mit der Achse 26a des zweiten Lenkhebel-Gelenks 26. Das zweite Lenkhebel-Gelenk 26, an dem die Verbindungs-Strebe 50 angekoppelt ist, kann jedoch allgemein auch beabstandet von dem ersten Lenkhebel-Gelenk 24 sein.

Die Funktionsweise der beschriebenen Ausführungsformen ist analog der anhand der Ausführungsform nach den Figuren 1 bis 5 beschriebenen Funktionsweise.

## Patentansprüche

1. Auftriebsklappen-Mechanismus zur Verstellung einer einem Tragflügel (1) zugeordneten Auftriebs-Klappe (2), der ein Antriebssystem (6) mit einem gelenkig mit zumindest einem von mehreren am Tragflügel (1) befestigten Klappen-Träger (3) verbindbaren Antriebsarm zur Verstellung derselben und, zur Lastaufnahme und kinematischen Führung der Auftriebsklappe (2), eine Hauptanschluß-Mechanik (7) und eine in Strömungsrichtung (X) gesehen beabstandet von dieser angeordnete Nebenanschluß-Mechanik (9) in Form eines mittels Gelenke (41, 42) an der Auftriebs-Klappe (2) und dem Klappen-Träger (3) lagerbaren Führungshebels (40) umfaßt,
**dadurch gekennzeichnet,**
**dass** die Hauptanschluß-Mechanik (7) eine Lenkhebel-Anordnung (20) mit zumindest einem Lenkhebel (20a, 20b) aufweist, der an seinem ersten Ende mit einem ersten Gelenk (8b) mit der AuftriebsKlappe (2) verbindbar ist und über ein zweites von dem ersten Gelenk beabstandeten Gelenk (26) mit einer Achse (26a) mit einer an dem Klappen-Träger (3) anordbaren Führung (22) verbunden ist, so dass die Achse (26a) auf einer vorgegebenen Bahn relativ zum Klappen-Träger (3) beweglich ist,
**dass** ein drittes Gelenk (24) zur Aufnahme eines Pendel-Elements (25) vorgesehen ist, mit dem der zumindest eine Lenkhebel (20a, 20b) mit dem Klappen-Träger (3) gelenkig verbindbar ist.

2. Auftriebsklappen-Mechanismus zur Verstellung einer einem Tragflügel (1) zugeordneten Auftriebs-Klappe (2) nach dem Anspruch 1, **dadurch gekennzeichnet, dass** die Führung (22) der Achse (26a) auf einer vorgegebenen B ahn relativ zum Klappen-Träger (3) geradlinig verläuft.

3. Auftriebsklappen-Mechanismus zur Verstellung einer einem Tragflügel (1) zugeordneten Auftriebs-Klappe (2) nach dem Anspruch 1, **dadurch gekennzeichnet, dass** die Führung (22) der Achse (26a) auf einer vorgegebenen B ahn relativ zum Klappen-Träger (3) kurvenförmig verläuft.

4. Auftriebsklappen-Mechanismus zur Verstellung einer einem Tragflügel (1) zugeordneten Auftriebs-Klappe (2) nach dem Anspruch 3, **dadurch gekennzeichnet, dass** die Führung (22) eine einerseits an dem Lenkhebel über die Achse (26a) und ein Gelenk (26) und andererseits an dem Klappen-Träger (3) anlenkbare Strebe (27) umfaßt.

5. Auftriebsklappen-Mechanismus zur Verstellung einer einem Tragflügel (1) zugeordneten Auftriebs-Klappe (2) nach einem der voranstehenden Ansprüche 1 bis 3, **dadurch gekennzeichnet, dass** die Führung (22) eine an dem Klappen-Träger (3) anordbare Führungsbahn (50) umfaßt, in der die Achse (26a) geführt ist.

6. Auftriebsklappen-Mechanismus zur Verstellung einer einem Tragflügel (1) zugeordneten Auftriebs-Klappe (2) nach einem der voranstehenden Ansprüche, **dadurch gekennzeichnet, daß** das Gelenk (24) zur Aufnahme des Pendel-Elementes (25) zwischen dem ersten (8b) und dem zweiten Lenkhebel-Gelenk (26) angeordnet ist.

7. Auftriebsklappen-Mechanismus zur Verstellung einer einem Tragflügel (1) zugeordneten Auftriebs-Klappe (2) nach einem der Ansprüche 1 bis 5, **dadurch gekennzeichnet, daß** das zweite Lenkhebel-Gelenk (26) im weiteren Lenkhebel-Gelenk (24) zur Aufnahme des Pendel-Elementes (25) angeordnet ist.

8. Auftriebsklappen-Mechanismus zur Verstellung einer einem Tragflügel (1) zugeordneten Auftriebs-Klappe (2) nach dem Anspruch 7, **dadurch gekennzeichnet, daß** in dem Lenkhebel-Gelenk (24, 26) eine Verbindungs-Strebe (60) gelagert ist, die starr mit dem Führungshebel (40) verbunden ist.

9. Auftriebsklappen-Mechanismus zur Verstellung einer einem Tragflügel (1) zugeordneten Auftriebs-Klappe (2) nach einem der voranstehenden Ansprüche, **dadurch gekennzeichnet, daß** die Lenkhebel-Anordnung (20) zwei Lenkhebel (20a, 20b) aufweist, von denen jeweils einer auf gegenüberliegenden Seiten des Klappen-Trägers (3) legbar sind.

10. Auftriebsklappen-Mechanismus zur Verstellung einer einem Tragflügel (1) zugeordneten Auftriebs-Klappe (2) nach dem Anspruch 9, **dadurch gekennzeichnet, daß** die zwei Lenkhebel im Bereich des ersten Gelenks (8b) über eine Führungsanordnung (18) mit einer lenkerseitigen (18a) und einer trägerseitigen Führungseinrichtung (18b) am Klappen-Träger (3) abgestützt werden kann.

11. Auftriebsklappen-Mechanismus zur Verstellung einer einem Tragflügel (1) zugeordneten Auftriebs-Klappe (2) nach dem Anspruch 9, **dadurch gekennzeichnet, daß** die zumindest zwei Lenkhebel im Bereich des ersten Gelenks (8b) über einen Bügel (19) miteinander verbunden sind, der vom Klappen-Träger (3) beabstandet ist.

12. Auftriebsklappen-Mechanismus zur Verstellung einer einem Tragflügel (1) zugeordneten Auftriebs-Klappe (2) nach einem der Ansprüche 9 bis 11, **dadurch gekennzeichnet, daß** das Pendel (25) am ersten Lenkhebel-Gelenk (24) zwischen zwei Lenkhebeln (20a, 20b) gelagert ist.

13. Auftriebsklappen-Mechanismus zur Verstellung einer einem Tragflügel (1) zugeordneten Auftriebs-Klappe (2) nach nach einem der voranstehenden Ansprüche, **dadurch gekennzeichnet, daß** das erste Gelenk (8b) als sphärisches Lager ausgebildet ist.

14. Anordnung von zumindest zwei Klappen-Trägern (3) eines Tragflügels (1), wobei an zumindest einem Klappen-Träger (3) ein Auftriebsklappen-Mechanismus nach einem der voranstehenden Ansprüche angeordnet ist.

## Claims

1. Lift flap mechanism for adjusting a lift flap (2) which is associated with a wing (1), which mechanism comprises a drive system (6) with a drive arm, which can be flexibly connected to at least one of several flap carriers (3), which are fastened to the wing (1), for adjusting the flap and for load bearing and the kinematic guidance of the lift flap (2), a main connection mechanism (7) and a secondary connection mechanism (9), arranged at a spacing from the latter in the direction of flow (X), in the form of a guide lever (40) which can be mounted by means of joints (41, 42) on the lift flap (2) and the flap carrier (3),
**characterised in that**
the main connection mechanism (7) has a steering lever arrangement (20) with at least one steering lever (20a, 20b) which can be connected at its first end by way of a first joint (8b) to the lift flap (2) and is connected via a second joint (26), spaced apart from the first joint, with a pin (26a) to a guide (22) which can be arranged on the flap carrier (3), so that the pin (26a) can move along a predetermined path relative to the flap carrier (3),
a third joint (24) is provided to hold a pendulum element (25), by way of which the at least one steering lever (20a, 20b) can be flexibly connected to the flap carrier (3).

2. Lift flap mechanism for adjusting a lift flap (2) which is associated with a wing (1) according to Claim 1, **characterised in that** the guide (22) of the pin (26a) extends in a straight line along a predetermined path relative to the flap carrier (3).

3. Lift flap mechanism for adjusting a lift flap (2) which is associated with a wing (1) according to Claim 1, **characterised in that** the guide (22) of the pin (26a) extends in the shape of a curve along a predetermined path relative to the flap carrier (3).

4. Lift flap mechanism for adjusting a lift flap (2) which is associated with a wing (1) according to Claim 3, **characterised in that** the guide (22) comprises a strut (27) which can be articulated on one side to the steering lever via the pin (26a) and a joint (26) and on the other side to the flap carrier (3).

5. Lift flap mechanism for adjusting a lift flap (2) which is associated with a wing (1) according to any one of the preceding Claims 1 to 3, **characterised in that** the guide (22) comprises a guideway (50) which can be arranged on the flap carrier (3) and in which the pin (26a) is guided.

6. Lift flap mechanism for adjusting a lift flap (2) which is associated with a wing (1) according to any one of the preceding Claims, **characterised in that** the joint (24) for holding the pendulum element (25) is arranged between the first (8b) and the second steering lever joint (26).

7. Lift flap mechanism for adjusting a lift flap (2) which is associated with a wing (1) according to any one of Claims 1 to 5, **characterised in that** the second steering lever joint (26) is arranged in the further steering lever joint (24) for holding the pendulum element (25).

8. Lift flap mechanism for adjusting a lift flap (2) which is associated with a wing (1) according to Claim 7, **characterised in that** a connecting strut (60) is mounted in the steering lever joint (24, 26), which strut is rigidly connected to the guide lever (40).

9. Lift flap mechanism for adjusting a lift flap (2) which is associated with a wing (1) according to any one of the preceding Claims, **characterised in that** the steering lever arrangement (20) has two steering levers (20a, 20b), each of which can be positioned on opposite sides of the flap carrier (3).

10. Lift flap mechanism for adjusting a lift flap (2) which is associated with a wing (1) according to Claim 9, **characterised in that** the two steering levers can be supported on the flap carrier (3) in the region of the first joint (8b) via a guide arrangement (18) with a guide device (18a) on the control lever side and a guide device (18b) on the carrier side.

11. Lift flap mechanism for adjusting a lift flap (2) which is associated with a wing (1) according to Claim 9, **characterised in that** the at least two steering levers are connected together in the region of the first joint (8b) via a yoke (19) which is spaced apart from the flap carrier (3).

12. Lift flap mechanism for adjusting a lift flap (2) which is associated with a wing (1) according to any one of Claims 9 to 11, **characterised in that** the pendulum (25) is mounted on the first steering lever joint (24) between two steering levers (20a, 20b).

13. Lift flap mechanism for adjusting a lift flap (2) which is associated with a wing (1) according to any one of the preceding Claims, **characterised in that** the first joint (8b) is formed as a spherical bearing.

14. Arrangement of at least two flap carriers (3) of a wing (1), wherein a lift flap mechanism according to any one of the preceding Claims is arranged at least on one flap carrier (3).

## Revendications

1. Mécanisme de volets de sustentation pour le réglage d'un volet de sustentation (2) associé à une aile portante (1), qui comprend un système de commande (6) comportant un bras de commande pouvant être relié de façon articulée à au moins l'un de plusieurs supports de volet (3) fixés sur l'aile portante (1) pour le réglage de ces derniers et, pour la reprise de charges et le guidage cinématique du volet de sustentation (2), une mécanique de jonction principale (7) et une mécanique de jonction secondaire (9) disposée à distance de cette dernière vu dans la direction d'écoulement (X), sous forme d'un levier de guidage (40) pouvant être monté au moyen d'articulations (41, 42) sur le volet de sustentation (2) et sur le support de volet (3),
**caractérisé en ce**
**que** la mécanique de jonction principale (7) présente un agencement de leviers de direction (20) comportant au moins un levier de direction (20a, 20b) qui peut être relié à sa première extrémité, par une première articulation (8b), au volet de sustentation (2), et est relié par l'intermédiaire d'une seconde articulation (26) comportant un axe (26a), distante de la première articulation, à un guide (22) pouvant être disposé sur le support de volet (3), de telle sorte que l'axe (26a) est mobile sur une trajectoire prédéfinie par rapport au support de volet (3),
**qu'**une troisième articulation (24) est prévue pour recevoir un élément pendulaire (25), par lequel le au moins levier de direction (20a, 20b) peut être relié de façon articulée au support de volet (3).

2. Mécanisme de volets de sustentation pour le réglage d'un volet de sustentation (2) associé à une aile portante (1) suivant la revendication 1, **caractérisé en ce que** le guide (22) de l'axe (26a) s'étend de façon rectiligne sur une trajectoire prédéfinie par rapport au support de volet (3).

3. Mécanisme de volets de sustentation pour le réglage d'un volet de sustentation (2) associé à une aile portante (1) suivant la revendication 1, **caractérisé en ce que** le guide (22) de l'axe (26a) s'étend de façon curviligne sur une trajectoire prédéfinie par rapport au support de volet (3).

4. Mécanisme de volets de sustentation pour le réglage d'un volet de sustentation (2) associé à une aile portante (1) suivant la revendication 3, **caractérisé en ce que** le guide (22) comprend une jambe de force (27) pouvant s'articuler d'un côté sur le levier de direction par l'intermédiaire de l'axe (26a) et d'une articulation (26) et de l'autre côté sur le support de volet (3).

5. Mécanisme de volets de sustentation pour le réglage d'un volet de sustentation (2) associé à une aile portante (1) suivant l'une des revendications précédentes 1 à 3, **caractérisé en ce que** le guide (22) comprend une glissière de guidage (50) pouvant être disposée sur le support de volet (3), dans laquelle est guidé l'axe (26a).

6. Mécanisme de volets de sustentation pour le réglage d'un volet de sustentation (2) associé à une aile portante (1) suivant l'une des revendications précédentes, **caractérisé en ce que** l'articulation (24) pour recevoir l'élément pendulaire (25) est disposée entre la première articulation (8b) et la seconde articulation (26) de levier de direction.

7. Mécanisme de volets de sustentation pour le réglage d'un volet de sustentation (2) associé à une aile portante (1) suivant l'une des revendications 1 à 5, **caractérisé en ce que** la seconde articulation (26) de levier de direction est disposée dans l'autre articulation (24) de levier de direction pour recevoir l'élément pendulaire (25).

8. Mécanisme de volets de sustentation pour le réglage d'un volet de sustentation (2) associé à une aile portante (1) suivant la revendication 7, **caractérisé en ce qu'**une jambe de force de liaison (60), reliée rigidement au levier de guidage (40), est montée dans l'articulation de levier de direction (24, 26).

9. Mécanisme de volets de sustentation pour le réglage d'un volet de sustentation (2) associé à une aile portante (1) suivant l'une des revendications précédentes, **caractérisé en ce que** l'agencement de leviers de direction (20) présente deux leviers de direction (20a, 20b), dont l'un peut être placé sur chacun des côtés opposés du support de volet (3).

10. Mécanisme de volets de sustentation pour le réglage d'un volet de sustentation (2) associé à une aile portante (1) suivant la revendication 9, **caractérisé en ce que** les deux leviers de direction peuvent être supportés sur le support de volet (3), dans la zone de la première articulation (8b), par l'intermédiaire d'un agencement de guidage (18) comportant un dispositif de guidage (18a) du côté levier et un dispositif de guidage (18b) du côté support.

11. Mécanisme de volets de sustentation pour le réglage d'un volet de sustentation (2) associé à une aile portante (1) suivant la revendication 9, **caractérisé en ce que** les au moins deux leviers de direction sont reliés entre eux dans la zone de la première articulation (8b) par l'intermédiaire d'un étrier (19) qui est distant du support de volet (3).

12. Mécanisme de volets de sustentation pour le réglage d'un volet de sustentation (2) associé à une aile portante (1) suivant l'une des revendications 9 à 11, **caractérisé en ce que** le pendule (25) est monté sur la première articulation de levier de direction (24) entre les deux leviers de direction (20a, 20b).

13. Mécanisme de volets de sustentation pour le réglage d'un volet de sustentation (2) associé à une aile portante (1) suivant l'une des revendications précédentes, **caractérisé en ce que** la première articulation (8b) est réalisée comme palier sphérique.

14. Agencement d'au moins deux supports de volet (3) d'une aile portante (1), dans lequel un mécanisme de volets de sustentation suivant l'une des revendications précédentes est disposé sur au moins un support de volet (3).
